**Europäisches Patentamt**

**European Patent Office**

**Office européen des brevets**

(19)

(11) **EP 1 320 182 A2**

(12) **EUROPÄISCHE PATENTANMELDUNG**

(43) Veröffentlichungstag:
**18.06.2003 Patentblatt 2003/25**

(51) Int Cl.⁷: **H02M 7/00**

(21) Anmeldenummer: **02027200.1**

(22) Anmeldetag: **05.12.2002**

| | |
|---|---|
| (84) Benannte Vertragsstaaten:<br>**AT BE BG CH CY CZ DE DK EE ES FI FR GB GR**<br>**IE IT LI LU MC NL PT SE SI SK TR**<br>Benannte Erstreckungsstaaten:<br>**AL LT LV MK RO**<br><br>(30) Priorität: **17.12.2001 DE 10161927** | (71) Anmelder: **SIEMENS AKTIENGESELLSCHAFT**<br>**80333 München (DE)**<br><br>(72) Erfinder:<br>• **Depenbrock, Manfred, Prof.**<br>**44797 Bochum (DE)**<br>• **Foerth, Christian**<br>**91056 Erlangen (DE)** |

(54) **Verfahren zum Bestimmen von Parametern eines Wechselrichters**

(57)    Die Erfindung betrifft ein Verfahren zum Bestimmen von Parametern für das Durchlass- und Schaltverhalten jedes einzelnen Gleichwegpaares (1 bis 6) eines Wechselrichters (22) am Anfang der Inbetriebnahme. Es ist vorgesehen, dass der Wechselrichter (22) in verschiedenen definierten Betriebspunkten mit konstanten Strangströmen betrieben wird, welche von zwei PI-Reglern eingestellt werden. Aus den Stellgrößen der PI-Regler und der bekannten Eingangsgleichspannung des Wechselrichters (22) werden dann die Parameter bestimmt.

FIG 1

EP 1 320 182 A2

**Beschreibung**

Die Erfindung betrifft ein Verfahren zum Bestimmen von Parametern eines Wechselrichters für das Durchlass- und Schaltverhalten eines Gleichwegpaares am Anfang der Inbetriebnahme eines wechselrichtergespeisten Drehstrommotors.

Einem Drehstrommotor, der z.B. ein Schienenfahrzeug oder eine Industriemaschine antreibt, ist ein Wechselrichter vorgeschaltet, durch den dem Motor eine Drehspannung mit der jeweils gewünschten Frequenz und Amplitude zugeleitet wird.

Dazu ist es erforderlich, die Spannung am Ausgang des Wechselrichters zu kennen. Falls man die Parameter des Wechselrichters kennt, kann die Spannung an dessen Ausgang, die der Spannung zwischen den Drehstromanschlüssen des Motors entspricht, allein durch eine Steuerung sehr genau in gewünschter Weise eingestellt werden. Anders als bei einer früher üblichen Regelung der Spannung am Ausgang des Wechselrichters sind dann keine aufwendigen Einrichtungen zur Messung der Motorspannung nötig.

Ein Verfahren zur Steuerung der Spannung am Ausgang des Wechselrichters ist aus der DE 198 13 363 A1 zu entnehmen. Dabei werden die Parameter entweder manuell mit zusätzlichen Messeinrichtungen ermittelt oder mit Hilfe von Datenblättern geschätzt.

Das Ergebnis des bekannten Verfahrens könnte verbessert werden, wenn die benötigten Parameter des Wechselrichters genauer zu bestimmen wären, ohne aufwendige Messeinrichtungen einsetzen zu müssen.

Die Parameter sind für das Durchlass- und Schaltverhalten des Wechselrichters verantwortlich. Geeignete Parameter sind beispielsweise die Durchlassspannung und die Schaltverzugszeit. Der Erfindung liegt die Aufgabe zugrunde, ein Verfahren zum Bestimmen von Parametern für das Durchlass- und Schaltverhalten jedes einzelnen Gleichwegpaares eines Wechselrichters anzugeben, das vollautomatisch und ohne zusätzliche aufwendige Messeinrichtungen durchführbar ist.

Ein solches Gleichwegpaar entspricht zwei zusammengehörigen Ventilzweigen des Wechselrichters.

Ein Wechselrichterstrang besteht z.B. aus zwei Gleichwegpaaren, wobei das eine Gleichwegpaar positiven Strangstrom und das andere negativen Strangstrom führen kann.

Die Aufgabe wird gemäß der Erfindung dadurch gelöst, dass der Wechselrichter in verschiedenen definierten Betriebspunkten mit konstanten Strangströmen betrieben wird, welche von zwei PI-Reglern (Proportional-Integral-Reglern) eingestellt werden, und dass aus den Stellgrößen der PI-Regler und der bekannten Eingangsgleichspannung des Wechselrichters die Parameter bestimmt werden.

Damit wird der Vorteil erzielt, dass zur Ermittlung der Parameter des Wechselrichters keine aufwendigen Messeinrichtungen erforderlich sind.

Vorteilhafte Ausgestaltungen sind den Unteransprüchen zu entnehmen.

Beispielsweise werden zuerst die Spannungsfehler von Gleichwegpaaren bei zwei verschiedenen Schaltfrequenzen ermittelt und damit dann die Parameter des Wechselrichters für alle vorkommenden Kombinationen von Strangstromwerten bestimmt.

Der Spannungsfehler eines Gleichwegpaares ist dabei stets der Mittelwert der Spannungsfehler der beiden Ventilzweige des Gleichwegpaares.

Der Spannungsfehler $\Delta u_x$ ist definiert als die Durchlassspannung $u_{t0x}$ plus dem Produkt aus erstens der Differenz von Ein- und Ausschaltzeit $T_{Ex}$-$T_{Ax}$ des Gleichwegpaares, zweitens der Gleichspannung $2E_d$ des Wechselrichters und drittens der Schaltfrequenz $f_T$.

$$\Delta u_x = u_{t0x} + (T_{Ex}\text{-}T_{Ax}) \cdot f_T \cdot 2E_d \quad x = 1;2..6 \tag{1}$$

Wenn die Spannungsfehler bei zwei verschiedenen Schaltfrequenzen ermittelt worden sind und die Zwischenkreisspannung gemessen wurde, können sowohl die Durchlassspannung als auch die Differenz aus Ein- und Ausschaltzeit bestimmt werden.

Beispielsweise werden bei einem Drehstrommotor am Wechselrichter die sechs Spannungsfehler in Abhängigkeit von der Stromstärke in den jeweiligen Gleichwegpaaren bestimmt.

Selbst wenn alle Spannungen zwischen den drei Anschlüssen des Drehstrommotors durch Messungen bekannt wären, bestünde das grundsätzliche Problem, dass bei jeder dieser Spannungen, die als Integral über die elektrische Feldstärke entlang eines Weges im Wechselrichter definiert sind, der von einem der Anschlüsse zu einem anderen führt, immer die Spannungsfehler von zwei verschiedenen Gleichwegpaaren untrennbar verbunden sind. Auch bei beliebig vielen Messvarianten erhält man dann nur fünf unabhängige Gleichungen, aus denen für einen bestimmten Stromwert die sechs unbekannten Spannungsfehler unmöglich bestimmt werden können.

Erst wenn durch eine mehr oder weniger willkürliche Annahme über den Satz der sechs Unbekannten deren Zahl auf fünf reduziert wird, können alle sechs rechnerisch eindeutig bestimmt werden.

Von den Gleichwegpaaren liefern drei positive Anschlussströme (x=1;3;5) und drei negative Anschlussströme (x=2;4;6).

Beispielsweise werden die Spannungsfehler $\Delta u_x$ der positiven und der negativen Dreiergruppe formal in ihren Mittelwert $\Delta u_P$ bzw. $\Delta u_N$ und die Differenzen zu diesem Mittelwert $\underline{\Delta u_x}$ aufgespalt im folgenden als Nullsummenfehler bezeichnet. Damit wird der Vorteil erzielt, dass die relativ zum Mittelwert definierten Abweichungen, die sich zu Null ergänzen, auf der Basis von Gleichungen sehr einfach und trotzdem sehr genau zu bestimmen sind.

Der Wechselrichter wird z.B. in einem Betriebspunkt betrieben, bei dem in einem Strang, der aus zwei entgegengerichteten Gleichwegpaaren besteht, ein positiver Strom $2 \cdot k \cdot I$ mit $0 < k < 1$ fließt.

Für die Größe k sind so viele feste Werte zu wählen, dass später für jeden beliebigen Strom Korrekturwerte durch Interpolation genügend genau ermittelt werden können. Zwei PI-Stromregler sorgen z.B. dafür, dass sich dieser Strom gleichmäßig auf die vom negativem Anschlussstrom durchflossenen Gleichwegpaare aufteilt. Die Stellgrößen der beiden PI-Regler sind dabei Pulssteuerwerte.

Damit wird der Vorteil erzielt, dass ein Unterschied in den Spannungsfehlern zweier parallel mit gleichem Strom arbeitenden Gleichwegpaare eindeutig allein aus der Differenz ihrer beiden Pulssteuerwerte sowie aus der Gleichspannung berechnet werden kann. Die dabei geltende Voraussetzung, dass die Statorwiderstände der beiden zugeordneten Stränge gleich sein müssen, ist in der Regel mit hoher Genauigkeit erfüllt, sofern sichergestellt ist, dass die beiden Wicklungsstränge während der Stromeinstellung gleiche Temperatur haben. Die Ersatzdurchlasswiderstände $R_F$ haben definitionsgemäß für alle Gleichwegpaare immer den gleichen Wert.

Um den Unterschied zwischen den Spannungsfehlern einer zweiten Kombination von parallel arbeitenden Gleichwegpaaren zu bestimmen, werden die gleichen Ströme wie vorher, aber in anderer Verteilung bezüglich der drei Lastanschlüsse, eingestellt. Aus den Werten der beiden Spannungsfehler-Unterschiede lassen sich die Nullsummenanteile der Spannungsfehler der negativen Dreiergruppe mit Gleichungen einfach, eindeutig und genau bestimmen. Für die positive Dreiergruppe müssen die Betriebspunkte mit gewechseltem Vorzeichen des Stroms eingestellt werden. Die Zwischenkreisspannungen müssen dabei nicht exakt gleich sein, was in der Praxis wegen der normalen Spannungsschwankungen im speisenden Netz sowieso nicht gewährleistet werden kann. Durch Interpolation zwischen den ermittelten Werten können die Nullsummenanteile der Spannungsfehler für jeden beliebigen Wert des zugeordneten Gleichwegpaarstromes und für alle sechs Gleichwegpaare in bekannter Weise bestimmt werden.

Beispielsweise werden für die aktuellen Ströme der Gleichwegpaare bei der aktuellen Gleichspannung aus vorher ermittelten Nullsummen-Spannungsfehlern die zugehörigen Nullsummen-Pulssteuer-Korrekturwerte berechnet und bei weiteren Messungen zu bekannten Pulssteuerwerten hinzugefügt.

Es können also in den nächsten Messreihen ständig die schon ermittelten Nullsummen-Spannungsfehler für die aktuellen Ströme der Gleichwegpaare mit der aktuellen Gleichspannung in Pulssteuerkorrekturwerte umgerechnet und dem von der Signalverarbeitung ermittelten Pulssteuerwerten hinzugefügt werden. Die drei Stränge des Wechselrichters unterscheiden sich dann bezüglich der zuvor noch vorhandenen Spannungsfehler nicht mehr.

Beispielsweise wird die Summe der Mittelwertanteile der Spannungsfehler ermittelt, wenn einer der drei Strangströme den Wert I und ein anderer den Wert Null hat. Der dritte Strangstrom hat dann den Wert -I. Diese Einstellung kann mit Hilfe der genannten PI-Regler erfolgen.

Ohne zusätzliche Messeinrichtungen kann allerdings nur die Summe der Mittelwertanteile der Spannungsfehler der positiven und der negativen Dreiergruppe bestimmt werden und dies auch nur dann, wenn die Summe der Widerstände $R_F$ und $R_S$ bekannt sind, die im folgenden als Ersatzstatorwiderstand bezeichnet wird.

Definitionsgemäß haben alle sechs Gleichwegpaare des Wechselrichters den gleichen Ersatzdurchlasswiderstand $R_F$.

Beispielsweise wird die Summe aus dem Statorwiderstand und dem Ersatzdurchlasswiderstand eines Gleichwegpaares durch Bildung der Differenz von jeweils zwei Messungen mit um $\Delta I$ verschiedenem Strangstrom bestimmt. Dazu werden für die beiden geregelten Anschlussströme Sollwerte mit gleichem Betrag, aber verschiedenem Vorzeichen gewählt. Bei relativ großen Werten der Ströme in den Gleichwegpaaren hängen die Durchlasswiderstände praktisch nicht mehr von den Strömen ab.

Die mit der Zwischenkreisspannung multiplizierte Differenz der beiden Stellgrößen ist gleich der Spannung zwischen den beiden zugeordneten Drehstrom-Anschlüssen, zuzüglich der Summe aus den Spannungsabfällen an den beiden stromführenden Gleichwegpaaren. Werden die genannten Größen für einen zweiten Betriebspunkt mit einem um $\Delta I$ geänderten Strom ermittelt, ergibt sich die Widerstandssumme durch Bildung der Differenz beider Gleichungen.

Die Summe der Widerstände wird beispielsweise bei gleicher Temperatur der stromdurchflossenen Leiter bestimmt, um gute Werte zu bekommen.

Für die Bestimmung der resultierenden Spannungsfehler werden aber zumindest sehr gute Näherungen für die beiden Mittelwertanteile der Spannungsfehler benötigt. Das wird z.B. dadurch erzielt, dass für beide Mittelwertanteile genau die Hälfte der ermittelten Summe $\Delta u_P(I) + \Delta u_N(I)$ gewählt wird. Die Fehler bei der Bestimmung der Spannungsfehler sind dann vergleichsweise klein, weil die beiden Mittelwertanteile der Spannungsfehler naturgemäß eine geringere Streuung aufweisen als der Satz der sechs ursprünglichen vollständigen Fehlerspannungen.

Darüber hinaus ist es mit dem Verfahren nach der Erfindung gesichert, dass nach den endgültigen Korrekturen, bezüglich drei über ein Pulsspiel gemittelter Sternspannungen nur Restfehler verbleiben, die zusammen ein Nullsystem von kleinen Gleichspannungen bilden, welches keinen Einfluss auf die Lastströme hat.

Für Strangströme, die betragsmäßig größer als I sind, werden beispielsweise zur Einstellung eines Strangstromes auf den Wert I die anderen Strangströme mit zwei PI-Reglern auf die nachfolgend gegebenen Sollwerte geregelt.

Zur Ermittlung der noch fehlenden Anteile an den Spannungsfehlern werden für die beiden mit PI-Reglern direkt geregelten Strangströme Sollwerte vorgegeben, deren Beträge k·I und (1+k)·I sind und deren Vorzeichen ungleich sind.

Beispielsweise wird ein fester korrigierter Pulssteuerwert für den Strang vorgegeben, dessen Strom I nicht unmittelbar geregelt wird.

Beispielsweise werden die Pulssteuerwerte nach folgenden Regeln gebildet: Alle drei erhalten als Vorsteuerwerte den mit der aktuellen Gleichspannung in einen Pulssteuerwert umgerechneten Spannungsabfall am resultierenden Ersatzstatorwiderstand. Für die Stränge, deren Strom direkt geregelt wird, wird die Stellgröße der PI-Regler hinzuaddiert.

Im nicht unmittelbar geregelten Strang wird z.B. der auf die aktuelle Zwischenkreisspannung bezogene und mit dem Vorzeichen des Strangstroms multiplizierte Näherungswert für die Mittelwertanteile der Spannungsfehler hinzugefügt.

Dann gibt es nur eine einzige Kombination der Regler-Stellgrößen, die bewirkt, dass die drei Strangströme genau mit ihren Sollwerten übereinstimmen. Beispielsweise liefert dann der PI-Regler, der dem Strang mit dem Strombetrag größer I zugeordnet ist, mit seiner Stellgröße den resultierenden Spannungsfehler des zugehörigen Gleichwegpaars bezogen auf die aktuelle Gleichspannung. Die Stellgröße des anderen PI-Reglers ergibt entsprechend dem Vorzeichen des Strangstroms die Näherung für den gesuchten Mittelwertanteil des Spannungsfehlers bezogen auf die aktuelle Zwischenkreisspannung.

Insgesamt werden für die sechs Gleichwegpaare sechs Messreihen benötigt. Die einzustellenden Strangströme ergeben sich dann durch zyklisches Vertauschen.

Besonders vorteilhaft ist, dass beim Korrekturverfahren die Sternpunktpotentialverlagerung bei allen möglichen Kombinationen der Werte der drei Strangströme immer gleich bleibt. Nur dadurch wird erreicht, dass aus den jeweils drei zugehörigen, unbekannten, nicht kompensierten Restfehlern lediglich ein nicht bemerkbares System von Spannungsfehlern der Nullsumme gebildet wird.

Zur Ermittlung aller Anteile der Spannungsfehler sind für alle sechs Gleichwegpaare zwei Durchläufe aller Messreihen bei verschiedener Schaltfrequenz erforderlich, wie oben beschrieben. Es werden verschiedene Betriebspunkte des Wechselrichters gewählt und aus den dann vorhandenen Gleichungen die Parameter für das Durchlass- und Schaltverhalten z.B. mittels der Spannungsfehler bestimmt.

Man kommt mit dem Verfahren nach der Erfindung vorteilhafterweise ohne aufwendige Messeinrichtungen aus.

Ein Ausführungsbeispiel des Verfahrens nach der Erfindung wird anhand der Zeichnung näher erläutert.

FIG 1 zeigt das Prinzipschaltbild der Einbindung des Wechselrichters in einen Schaltkreis.

FIG 2 zeigt das Prinzipschaltbild des Wechselrichters, an den der Motor angeschlossen ist. Die Spannungsfehler $\Delta u_x$ und die Ersatzdurchlasswiderstände $R_F$ der Gleichwegpaare sind explizit dargestellt. Die dargestellten Leistungshalbleiter, Dioden und IGBTs (Insulated Gate Bipolar Transistor), haben somit ideales Verhalten.

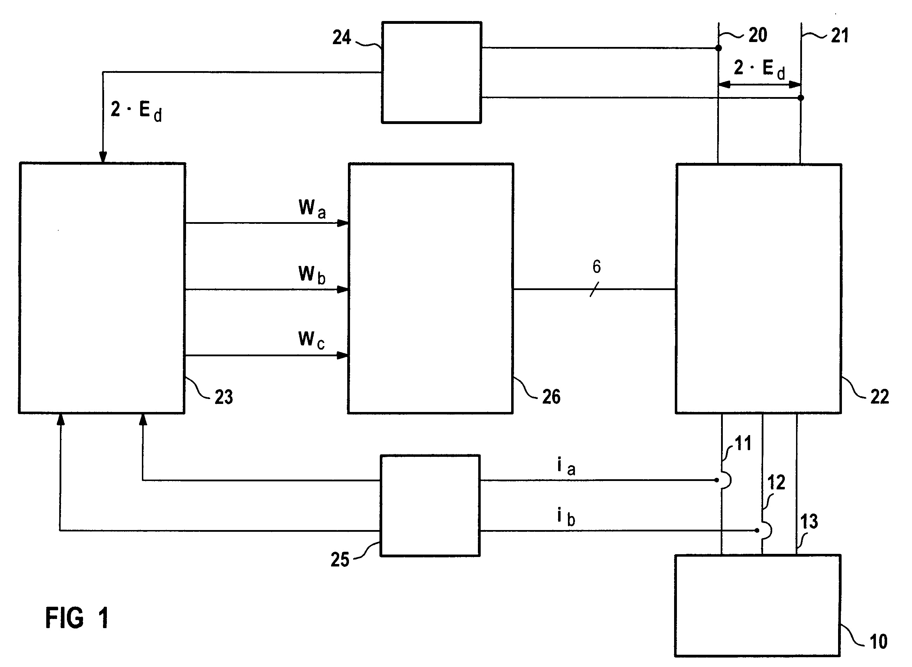

Nach Figur 1 sind zwei Anschlüsse 20 und 21, an denen die Spannung $2E_d$ anliegt, mit einem Wechselrichter 22 verbunden. Mit dem Wechselrichter 22 steht über die Motorleitungen 11, 12, 13 ein Drehstrommotor 10 in Verbindung. Eine Ablaufsteuervorrichtung 23 steht mit den Anschlüssen 20 und 21 über einen Messwandler für Zwischenkreisspannung 24 in Verbindung, so dass die Spannung $2E_d$ mitgeteilt wird. Die Ablaufsteuereinrichtung 23, die zwei PI-Regler enthält, steht außerdem über einen Messwandler für Strangströme 25 mit zwei Motorleitungen 11 und 12 in Verbindung. Von der Ablaufsteuervorrichtung 23 werden Pulssteuerwerte $w_a$, $w_b$, $w_c$ an eine Ansteuerelektronik 26 abgegeben, die mit dem Wechselrichter 22 verbunden ist.

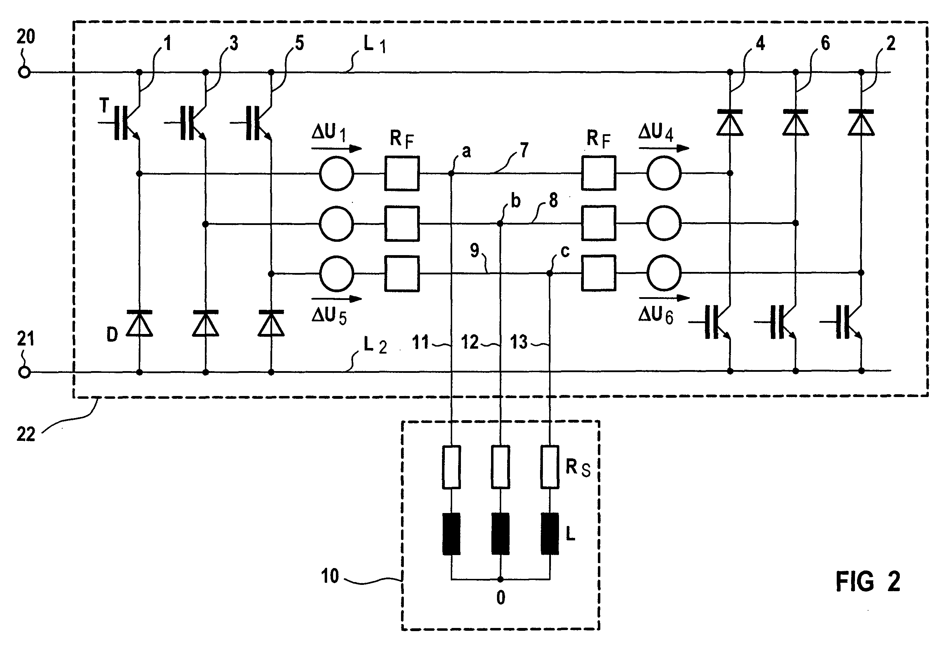

Nach Figur 2 ist der Wechselrichter 22 zur Spannungsversorgung an die Anschlüsse 20 und 21 angeschlossen. Zwischen den von den Anschlüssen 20 und 21 ausgehenden Anschlussleitungen L1 und L2 sind sechs Gleichwegpaare 1 bis 6 angeordnet. Jedes Gleichwegpaar 1 bis 6 besteht aus einer Diode D und einem IGBT T, die bei den ersten drei Gleichwegpaaren 1, 3 und 5 von den Anschlussleitungen L1 und L2 weg durchlässig und bei den zweiten drei Gleichwegpaaren 2, 4 und 6 zu den Anschlussleitungen L1 und L2 hin durchlässig sind. Zwischen Diode D und IBGT T sind jeweils zwei unterschiedliche Gleichwegpaare einen Strang bildend über Leitungen 7 bis 9 miteinander verbunden. An diesen Leitungen 7 bis 9 befinden sich Lastanschlüsse a, b, c für den Drehstrommotor 10, der über Motorleitungen 11 bis 13 angeschlossen ist. Die drei Stränge sind gebildet

1. durch die Gleichwegpaare 1 und 4,
2. durch die Gleichwegpaare 3 und 6 und
3. durch die Gleichwegpaare 5 und 2.

Die ersten Gleichwegpaare 1, 3, 5 liefern positive Anschlussströme, die zweiten Gleichwegpaare 2, 4, 6 negative Anschlussströme.

Zur Ansteuerung des Wechselrichters 22 stehen die IGBT T mit der Ansteuerelektronik 26 (Fig. 1) in Verbindung.

In einem bestimmten Betriebspunkt, bei dem in der ersten Motorleitung 11 ein positiver Strom fließt, wird dafür gesorgt, dass sich dieser Strom $i_a = 2 \cdot k \cdot I$ mit $0 < k < 1$ gleichmäßig auf die zweiten Gleichwegpaare 2 und 6 aufteilt. Dazu werden die Stellgrößen zweier PI-Regler als Pulssteuerwerte verwendet, nachdem diese PI-Regler die Ströme $i_b$ und $i_c$ in den von den Lastanschlüssen b und c ausgehenden Motorleitungen 12 und 13 auf einen gemeinsamen Sollwert eingestellt haben. Unter der Voraussetzung, dass die Widerstände der Statorwicklungen des Drehstrommotors 10 in den Strängen der Lastanschlüsse b und c übereinstimmen, muss dann für die Pulssteuerwerte $w_y$ (y=a;b;c) gelten, wobei die römische Zahl als Index die Nummerierung der Messung ist:

$$(w_{bI}(kI) - w_{cI}(kI)) \cdot E_{dI} = (\Delta_{u2}(kI) - \Delta_{u6}(kI)) \tag{2}$$

Dabei ist $w_y$ der Pulssteuerwert für den jeweiligen Lastanschluss b oder c, $E_d$ ist die Hälfte der Eingangsgleichspannung zwischen den Anschlüssen 20 und 21 und $\Delta u_x$ ist der Spannungsfehler des jeweiligen Gleichwegpaares 2, 6.

Das bedeutet, dass ein Unterschied in den Spannungsfehlern $\Delta u_x$ zweier parallel mit gleichem Strom arbeitender Gleichwegpaare 2, 6 eindeutig allein aus der Differenz ihrer beiden Pulssteuerwerte $w_y$ und der Gleichspannung $E_d$ berechnet werden kann. Die einzige Voraussetzung, dass die Statorwiderstände der beiden zugeordneten Lastanschlüsse gleich sind, ist in der Regel mit hoher Genauigkeit erfüllt, wenn man sicherstellt, dass die beiden Wicklungen des Drehstrommotors 10, die den Lastanschlüssen b und c zugeordnet sind, während der Stromeinschaltung gleiche Temperatur haben. Ersatzdurchlasswiderstände $R_F$ des Wechselrichters 22 haben bereits definitionsgemäß für alle Gleichwegpaare 1 bis 6 immer den gleichen Wert.

Auf diesen Erkenntnissen beruht der Erfindungsgedanke, die Spannungsfehler $\Delta u_x$ x = 1..6 der beiden Dreiergruppen von Gleichwegpaaren 1, 3, 5 sowie 2, 4, 6 formal in ihren Mittelwert $\Delta u_P$ bzw. $\Delta u_N$ und die Differenzen $\Delta \underline{u}_x$ zu diesem Mittelwert aufzuspalten. Es lassen sich dann die Abweichungen vom Mittelwert (Differenzen), die sich zu Null ergänzen, auf der Basis von Gleichungen entsprechend der oben genannten Gleichung (2) sehr einfach und trotzdem sehr genau bestimmen.

In der ersten Dreiergruppe aus Gleichwegpaaren 1, 3, 5 werden die Mittelwerte der Spannungsfehler mit $\Delta u_P$ bezeichnet. In der zweiten Dreiergruppe werden die Mittelwerte der Spannungsfehler mit $\Delta u_N$ bezeichnet. Es ergibt sich:

$$\Delta u_P = (\Delta u_1 + \Delta u_3 + \Delta u_5) / 3$$

$$\Delta u_N = (\Delta u_2 + \Delta u_4 + \Delta u_6) / 3 \tag{3}$$

Aus den Gleichungen (3) ergibt sich für die Nullsummen-Spannungsfehler

$$\Delta \underline{u}_x = \Delta u_x - \Delta u_P; \text{ für } x=1, 3 \text{ oder } 5$$

$$\Delta \underline{u}_x = \Delta u_x - \Delta u_N; \text{ für } x=2, 4 \text{ oder } 6 \tag{4}$$

In einem zweiten Schritt wird ein anderer Betriebspunkt gewählt, der sich dadurch auszeichnet, dass ein positiver Strom in der zweiten Motorleitung 12 fließt, der sich dieses Mal gleichmäßig auf die Gleichwegpaare 2 und 4 aufteilt. Man erhält dann eine der Gleichung (2) entsprechende weitere Gleichung:

$$(w_{aII}(kI) - w_{cII}(kI)) \cdot E_{dII} = \Delta u_2(kI) - \Delta u_4(kI) = \Delta \underline{u}_2(kI) - \Delta \underline{u}_4(kI) \tag{5}$$

Aus den bisher genannten Gleichungen lassen sich drei Nullsummen-Spannungsfehler $\Delta\underline{u}_2(kI)$, $\Delta\underline{u}_4(kI)$ und $\Delta\underline{u}_6(kI)$ einfach, eindeutig und genau bestimmen. Dabei ist es wichtig, dass die Spannungen $E_d$ bei beiden Messungen nicht exakt gleich sein müssen. Das ist nämlich in der Praxis wegen der normalen Spannungsschwankungen im speisenden Netz nicht gewährleistet. Bei einem Strom kI im zugeordneten Gleichwegpaar 2 erhält man für den Nullsummen-Spannungsfehler $\Delta\underline{u}_2$ dann:

$$\Delta \underline{u}_2(kI) = 1/3 \cdot ((w_{bI} - w_{cI}) \cdot Ed_I + (w_{aII} - w_{cII}) \cdot E_{dII}) \tag{6}$$

Dabei ist I der Basiswert und k ist der Variationsparameter des Gleichwegpaar-Stromes.

In gleicher Weise werden mit weiteren Paaren von je zwei Betriebspunkten mit anderen Werten der Gleichwegpaarströme die jeweils sechs zugehörigen Nullsummen-Spannungfehler $\Delta\underline{u}_x$ bestimmt und die Ergebnisse in Tabellen im Speicherbereich der Signalverarbeitung abgelegt. Durch Interpolation werden dann die Nullsummen-Spannungsfehler $\Delta\underline{u}_x$ für jeden beliebigen Wert des zugeordneten Gleichwegpaarstromes für alle sechs Gleichwegpaare 1 bis 6 in bekannter Weise bestimmt.

Es spielt keine Rolle, dass die Ersatzdurchlasswiderstände $R_F$ nicht bekannt sind, denn die zugeordneten Durchlassspannungen gehören per Definition niemals zu den Nullsummen-Spannungsfehlern $\Delta\underline{u}_x$.

Im weiteren werden für die aktuellen Ströme in den Gleichwegpaaren 1 bis 6 bei der gerade aktuellen Gleichspannung $2 \cdot E_d$ aus den schon abgelegten Tabellenwerten der Nullsummen-Spannungsfehler $\Delta\underline{u}_x$ zugehörige Nullsummen-Pulssteuer-Korrekturwerte $\Delta\underline{w}_y$ berechnet. Dabei entspricht $\Delta\underline{w}_y$ dem Quotienten aus $\Delta\underline{u}_x$ und $E_d$. Diese Korrekturwerte werden in bekannter Weise den unter Idealbedingungen für gewünschte Lastspannungen erforderlichen Pulssteuerwerten $w_y$ vorzeichenrichtig hinzugefügt. Das bedeutet, dass die sechs Nullsummen-Spannungsfehler $\Delta\underline{u}_x$ ständig restlos kompensiert werden. Die drei Stränge des Wechselrichters unterscheiden sich dann nicht mehr hinsichtlich der noch vorhandenen Spannungsfehler. Um die restlichen Anteile der Spannungsfehler $\Delta u_x$ zu bestimmen, werden weitere Messungen benötigt.

Nach der Korrektur der Nullsummen-Spannungsfehler $\Delta\underline{u}_x$ ergeben sich zur Bestimmung eines Mittelwertanteils besonders übersichtliche Verhältnisse, wenn einer der drei Strangströme den Wert Null hat. Dieser Status kann durch die Differenz von zwei Pulssteuerwerten eingestellt werden, z.B. mit Hilfe zweier Stromregler. Es ergibt sich die Gleichung:

$$(w_{bIII}(I) - w_{cIII}(I)) \cdot E_{dIII} = 2 \cdot (R_s + R_F) \cdot I + \Delta u_p(I) + \Delta u_N(I). \tag{7}$$

Dabei ist I der Basiswert des Gleichwegpaar-Stromes und $R_S$ der Statorwiderstand bei einer Sternschaltung. Man kann also ohne zusätzliche Messeinrichtungen die Summe der beiden Mittelwertanteile der Spannungsfehler $\Delta u_x$ bestimmen, das aber nur dann, wenn die Summe aus dem Ersatzdurchlasswiderstand $R_F$ und dem aktuellen Statorwiderstand $R_s$ bekannt ist.

Diese Summe wird wie folgt bestimmt: Die bekannten Nullsummen-Spannungsfehler $\Delta\underline{u}_x$ werden korrigiert, dann haben jeweils drei der sechs Gleichwegpaare scheinbar den gleichen differentiellen Durchlasswiderstand. Da die Ströme I in den Gleichwegpaaren 1 bis 6 relativ groß sind, hängen diese wirksamen differentiellen Widerstände praktisch nicht mehr von den Strömen ab. Sie haben konstante Werte. Als Ersatzdurchlasswiderstand $R_F$ kann dann der Mittelwert dieser differentiellen Widerstände definiert werden. Die Summe der Spannungsfehler $\Delta u_P(I) + \Delta u_N(I)$ bleibt dann konstant.

Im Folgenden werden die Ströme durch Änderung der PI-Regler-Sollwerte um $\Delta I$ reduziert. Es ergeben sich neue Pulssteuerwerte $w_y(I - \Delta I)$. Als Differenz der Gleichungen für verschiedene Ströme und Pulssteuerwerte erhält man:

$$(w_{bIII} - w_{cIII})(I) \cdot E_{d3} - (w_{bIV} - w_{cIV})(I - \Delta I) \cdot E_{dIV} = 2 \cdot (R_s + R_F) \cdot \Delta I \tag{8}$$

Es wird dabei vorausgesetzt, dass beide Messungen für unterschiedliche Ströme bei gleicher Statortemperatur stattfinden. Aus der Gleichung (8) lässt sich dann die Widerstandssumme direkt bestimmen. Damit ergibt sich aus Gleichung (7) die Summe der Spannungsfehler $\Delta u_P(I) + \Delta u_N(I)$. Dseie Summe der Spannungsfehler ist exakt bestimmbar. Weil die beiden Mittelwertanteile der Spannungsfehler $\Delta u_P(I)$ und $\Delta u_N(I)$ stets eine geringere Streuung aufweisen als die sechs ursprünglichen, vollständigen Spannungsfehler, hat die folgende willkürliche Annahme, die die Zahl der Unbekannten von 6 auf 5 reduziert, praktisch keinen Einfluss auf die Güte der endgültigen Korrektur aller Spannungsfehler:

$$\Delta\hat{u}_P(I) = \Delta\hat{u}_N(I) = 0{,}5\cdot(\Delta u_P(I)+\Delta u_N(I)) \tag{9}$$

Durch diese Annahme hinaus wird nur ein Nullsystem mit kleinen Gleichspannungen gebildet, was zu einem sehr kleinen Restfehler relativ zum Mittelpunkt der Eingangsgleichspannung führt. Die Verlagerungsspannung zwischen einem idealen Laststernpunkt und dem Mittelpunkt der Eingangsgleichspannung hat praktisch keinerlei Auswirkung auf die Ausgangs-Lastströme.

In einem dritten Schritt wird für einen von drei Strangströmen des Wechselrichters der konstante Stromstärkewert I gewählt. Mit diesem Wert wird mit einer Serie von Betriebspunkten gemessen. Für eine andere Serie von Betriebspunkten wird dann der entsprechende negative Stromstärkewert -I gewählt. In beiden Fällen ist die zugehörige Näherung

$0{,}5\cdot(\Delta u_P(I)+\Delta u_N(I))$ für die exakten Mittelwert-Anteile der Spannungsfehler bekannt.

Um die gewählten Stromstärkewerte einzustellen, werden jeweils die anderen Strangströme mittels der beiden PI-Regler auf die vorgegebenen Sollwerte kI und -(1+k)I geregelt.

Für jeden gewünschten Betriebspunkt der beiden Messserien werden die Pulssteuerwerte $w_y$ nach den folgenden Regeln zusammengesetzt:

1. Für alle drei Stränge werden Vorsteuerwerte gebildet $w_y=(R_F+R_s)\cdot i_y/E_d$. Dabei ist für $R_F+R_s$ der gerade aktuelle Wert einzusetzen.

2. In demjenigen Strang, dessen Strom nicht unmittelbar geregelt wird, ist als fester Korrekturwert $0{,}5\cdot(\Delta u_P(I)+\Delta u_N(I))\cdot\text{sign}(i_y)/E_d$ zum Vorsteuerwert $w_y$ zu addieren.

3. In den beiden Strängen, deren Ströme direkt geregelt werden, ist die Stellgröße des zugeordneten Reglers als variabler Korrekturwert $w_{y,st}$ zum Vorsteuerwert $w_y$ zu addieren.

Bei Vorgabe eines festen Pulssteuer-Korrekturwertes in demjenigen Strang, dessen Strom nicht unmittelbar geregelt wird, gibt es nur eine einzige Kombination der beiden anderen Pulssteuerwerte, die bewirkt, dass die drei Strangströme genau mit ihren Sollwerten übereinstimmen. Bei exakter Vorsteuerung liefern die beiden PI-Regler dann mit ihren Stellgrößen genau diejenigen beiden Pulssteuer-Korrekturwerte, die zum fest vorgegebenen, im Prinzip fehlerbehafteten, dritten Korrekturwert so passen, dass bezüglich der Spannungen zwischen den Lastanschlüssen a, b, c keine Fehler auftreten. Die beiden aus der Stromregelung bestimmbaren resultierenden Pulssteuer-Korrekturwerte $w_{y,st}(i_y)$ kompensieren also nicht nur die bisher unbekannten Mittelwertanteile der Spannungsfehler $\Delta u_P$ und $\Delta u_N$ bei den zugehörigen Stromstärken $i_y$, sie sorgen sogar auch noch automatisch für die gleiche Verlagerung des Sternpunktpotentials des Drehstrommotors 10.

Besonders wichtig ist, dass durch das Verfahren nach der Erfindung die Sternpunktpotentialverlagerung bei allen möglichen Kombinationen der Werte für die drei Strangströme immer gleich bleibt. Nur dadurch wird erreicht, dass aus den jeweils drei zugehörigen, unbekannten, nicht kompensierten Restfehlern nur ein unerhebliches Nullsystem von Spannungsfehlern gebildet wird.

Aus der ersten Serie von Betriebspunkten mit z.B. den Strömen $i_a=I$, $i_b=kI$ und $i_c=-(1+k)I$ erhält man die gewünschten Näherungen für die Spannungsfehler:

$$\Delta\hat{u}_p(i_y) = w_{b,st}(i_b)\cdot E_d; \qquad 0 < i_b < I$$

$$\Delta\hat{u}_2(i_c) = -w_{c,st}(i_c)\cdot E_d; \qquad I < i_c < 2\cdot I$$

In der ersten Serie von Messungen liefert der PI-Regler mit seiner Stellgröße direkt die resultierende Summe der Korrekturanteile des Pulssteuerwertes $w_{c,st}(i_c)$ für das Gleichwegpaar 2, sofern für die Ströme keine Vorkorrektur der Nullsummen-Spannungsfehler erfolgt.

In einer zweiten Serie von Betriebspunkten mit gewechseltem Stromstärkevorzeichen werden dann die entsprechenden Korrekturen für den Pulssteuerwert $W_{c,st}(i_c)$ des fünften Gleichwegpaares 5 bestimmt.

$$\Delta\hat{u}_5(i_c) = w_{c,st}(i_c)\cdot E_d; \qquad I < i_c < 2\cdot I$$

$$\Delta \hat{u}_N(i_y) = -w_{b,st}(i_b) \cdot E_d; \qquad 0 < i_b < I$$

Zur Ermittlung der resultierenden Spannungsfehler $\Delta \hat{u}_x$ bei den übrigen vier Gleichwegpaaren 1, 3, 4 und 6 werden dann vier weitere Serien von Betriebspunkten benötigt. Die einzustellenden Strangströme erhält man durch zyklisches Vertauschen der Lastanschlüsse a, b, c.

Mit den gewonnenen Spannungsfehlern $\Delta \hat{u}_x$ werden die gewünschten Parameter bestimmt, die es ermöglichen, das Durchlassund Schaltverhalten jedes einzelnen Gleichwegpaars eines Wechselrichters am Anfang der Inbetriebnahme in einfacher Weise und ohne zusätzliche Bauteile zu ermitteln.


**Patentansprüche**

1. Verfahren zum Bestimmen von Parametern eines Wechselrichters (22) für das Durchlass- und Schaltverhalten jedes einzelnen Gleichwegpaares (1 bis 6) am Anfang der Inbetriebnahme eines wechselrichtergespeisten Drehstrommotors,
   **dadurch gekennzeichnet, dass** der Wechselrichter (22) in verschiedenen definierten Betriebspunkten mit konstanten Strangströmen betrieben wird, welche von zwei PI-Reglern eingestellt werden, und dass aus den Stellgrößen der PI-Regler und der bekannten Eingangsgleichspannung des Wechselrichters (22) die Parameter bestimmt werden.

2. Verfahren nach Anspruch 1,
   **dadurch gekennzeichnet, dass** der Wechselrichter (22) in einem Betriebspunkt betrieben wird, bei dem in einem Strang, der aus zwei entgegengerichteten Gleichwegpaaren (1, 4; 3, 6; 5, 2) besteht, ein konstanter Strom fließt.

3. Verfahren nach einem der Ansprüche 1 oder 2,
   **dadurch gekennzeichnet, dass** die Spannungsfehler ($\Delta u_x$) von Gleichwegpaaaren (1 bis 6) bei zwei verschiedenen Schaltfrequenzen ermittelt und damit dann die Parameter des Wechselrichters (22) bestimmt werden.

4. Verfahren nach Anspruch 3,
   **dadurch gekennzeichnet, dass** bei einem Drehstrommotor (10) am Wechselrichter (22) die sechs Spannungsfehler ($\Delta u_x$) in Abhängigkeit von der Stromstärke in den jeweiligen Gleichwegpaaren (1 bis 6) bestimmt werden.

5. Verfahren nach einem der Ansprüche 3 oder 4,
   **dadurch gekennzeichnet, dass** die Spannungsfehler ($\Delta u_x$) jeder Dreiergruppe formal in ihren Mittelwert ($\Delta u_N$ und $\Delta u_P$ )und die Differenzen zu diesem Mittelwert ($\Delta \underline{u}_x$) aufgespalten werden.

6. Verfahren nach einem der Ansprüche 3 bis 5,
   **dadurch gekennzeichnet, dass** für die aktuellen Ströme der Gleichwegpaare (1 bis 6) bei der aktuellen Gleichspannung aus vorher ermittelten Nullsummen-Spannungsfehlern ($\Delta \underline{u}_x$) die zugehörigen Nullsummen-Pulssteuer-Korrekturwerte ($\Delta \underline{w}_y$) berechnet werden und bei weiteren Messungen zu bekannten Pulssteuerwerten ($w_y$) hinzugefügt werden.

7. Verfahren nach einem der Ansprüche 5 oder 6,
   **dadurch gekennzeichnet, dass** die Summe der Mittelwertanteile der Spannungsfehler ($\Delta u_P(I) + \Delta u_N(I)$) ermittelt wird, wenn einer der drei Strangströme den Wert Null hat.

8. Verfahren nach einem der Ansprüche 1 bis 7,
   **dadurch gekennzeichnet, dass** die Summe aus Statorwiderstand ($R_s$) und Ersatzdurchlasswiderstand ($R_F$) eines Gleichwegpaares (1 bis 6) durch Bildung der Differenz von jeweils zwei Messungen mit um $\Delta I$ verschiedenem Strangstrom bestimmt wird.

9. Verfahren nach Anspruch 8,
   **dadurch gekennzeichnet, dass** die Summe der Widerstände ($R_F + R_s$) bei gleicher Temperatur der stromdurchflossenen Leiter bestimmt wird.

10. Verfahren nach einem der Ansprüche 1 bis 9,
    **dadurch gekennzeichnet, dass** zur Einstellung eines Strangstromes die anderen Strangströme mit zwei PI-Reglern auf die gegebenen Sollwerte geregelt werden.

11. Verfahren nach einem der Ansprüche 1 bis 10,
**dadurch gekennzeichnet, dass** ein fester korrigierter Pulssteuerwert ($w_y$) für einen Strang vorgegeben wird, dessen Strom nicht unmittelbar geregelt wird.

EP 1 320 182 A2

FIG 1

FIG 2